# FASCICULE DE BREVET EUROPEEN

(11) **EP 1 586 468 B1**
(45) Date de publication et mention de la délivrance du brevet: **25.05.2011**
(21) Numéro de dépôt: 05102052.7
(22) Date de dépôt: 16.03.2005
(51) Int. Cl.: B60C 23/04

(54) **Poche de maintien de détecteur électronique**
Beutel zum Tragen eines elektronischen Detektors
Pocket for holding an electronic detector

(30) Priorité: 18.03.2004 FR 0402886
(43) Date de publication de la demande: 19.10.2005
(73) Titulaire: Société de Technologie Michelin, 63000 Clermont-Ferrand (FR); Michelin Recherche et Technique S.A., 1763 Granges-Paccot (CH)
(72) Inventeur: Borot, Martine, 63118 Cebazat (FR)
(74) Mandataire: Diernaz, Christian

(56) Documents cités:
- EP-A- 1 318 032

## Description

L'invention concerne un dispositif permettant de maintenir de manière amovible sur la surface intérieure d'un pneumatique un module de surveillance comprenant généralement des éléments électroniques.

L'usage de modules électroniques dans les pneumatiques permet une multitude d'applications consistant à acquérir, stocker et transmettre des informations dans le but de suivre la fabrication ou la logistique, et plus généralement de renseigner l'usager sur l'évolution des performances du pneumatique pendant toute sa durée de vie.

Ce module électronique de surveillance comprend des composants actifs reliés à un système autonome d'alimentation en énergie électrique tel que par exemple des batteries ou encore un système à couplage inductif, et dont l'objet ne fait pas partie de l'invention. Ce module de surveillance est conçu de manière à échanger les informations désirées avec un module externe, servant d'interface avec l'usager, par l'intermédiaire d'ondes radio dont la fréquence et la puissance sont déterminés par des protocoles de transmission spécifiques. Le module est généralement disposé à l'intérieur d'une coque de protection souple ou rigide, destinée à préserver les composants électroniques des agressions liées aux chocs, et à l'ambiance régnant dans le pneumatique et son environnement.

Le module de surveillance, placé à l'intérieur de la cavité formée par le pneumatique une fois monté sur la roue, peut être disposé sur un grand nombre de supports. Ainsi il peut être fixé à la valve, fixé sur la jante, fixé ou collé sur la paroi intérieure de l'enveloppe ou encore intégré aux composants du pneumatique. Le choix d'une de ces solutions dépend de la nature du pneumatique et des sollicitations qu'il peut endurer, de la nature de la source d'énergie du module électronique, des informations que l'on désire suivre et de l'accessibilité souhaitée en cas de maintenance.

Des solutions consistant à disposer des poches élastiques sur la paroi intérieure du pneumatique ont été décrites à titre d'exemple dans le brevet US 5 500 065 ou dans le document EP 1 318 032 A2. Elles présentent toutefois l'inconvénient de devoir être disposées après la réalisation du pneumatique. Ceci entraîne la mise en oeuvre d'un processus particulier consistant à préparer la portion de surface destinée à recevoir le support ou la cavité élastique puis à réaliser le collage ou la vulcanisation de ce support sur ladite portion de surface et tel que décrit, à titre d'exemple, dans le brevet US 6 244 104.

L'invention consiste à améliorer cette situation en proposant un pneumatique comprenant une cavité destinée à recevoir un module de surveillance dont le mode de réalisation présente des avantages améliorés par rapport aux modes de réalisation connus.

Ladite cavité est disposée au sein des composants dudit pneumatique, et se caractérise en ce que l'ouverture de ladite cavité débouche dans le volume intérieur du pneumatique, et qu'elle est située sur une portion d'un joint d'aboutage d'une première couche formée par les profilés caoutchouteux adjacents au volume intérieur dudit pneumatique. Le volume intérieur du pneumatique est définit par la partie du pneumatique destinée à contenir la pression d'air.

Cette configuration permet de disposer ladite cavité entre la première couche et une deuxième couche formée par les profilés caoutchouteux ayant une liaison caoutchoutique avec ladite première couche.

La cavité est formée par une absence localisée de liaisons caoutchoutiques entre ladite première couche et ladite deuxième couche.

Il suffira alors, pendant les opérations de confection du pneumatique, d'interposer une pièce intermédiaire amovible ou destinée à rester à demeure, comportant au moins une face anti-collante, pour empêcher la formation des liaisons caoutchoutiques entre la première et la deuxième couche au moment de l'opération de vulcanisation.

La description ci après se propose de donner des exemples non limitatifs de réalisation d'un pneumatique conforme à l'invention, en s'appuyant sur les figures dans lesquelles :
- la figure 1 représente une vue en coupe schématique partielle d'un pneumatique comportant une cavité conforme à l'invention,
- les figures 2 à 4 détaillent des configurations particulières de cavités ainsi que les empilages de profilés correspondants,
- la figure 5 représente une vue schématique en perspective d'un mode particulier d'arrangement d'une pièce intermédiaire destinée à demeurer dans le pneumatique,
- la figure 6 représente une vue schématique en perspective d'un autre mode particulier d'arrangement d'une pièce intermédiaire destinée à demeurer dans le pneumatique,
- les figures 7 à 10 représentent des vues schématiques d'une séquence particulière d'empilage des profilés permettant de former une cavité,
- les figures 11 à 14 représentent des vues schématiques d'une autre séquence particulière d'empilage des profilés permettant de former une cavité,
- les figures 15 à 17 représentent des vues schématiques en perspective des étapes de réalisation d'un pneumatique lors de l'empilage d'un premier type de profilés permettant de former une cavité,
- les figures 18 à 20 représentent des vues schématiques en perspective des étapes de réalisation d'un pneumatique lors de l'empilage d'un deuxième type de profilés permettant de former une cavité,
- la figure 21 représente une vue schématique d'un module de surveillance disposé dans une cavité conforme à l'invention.

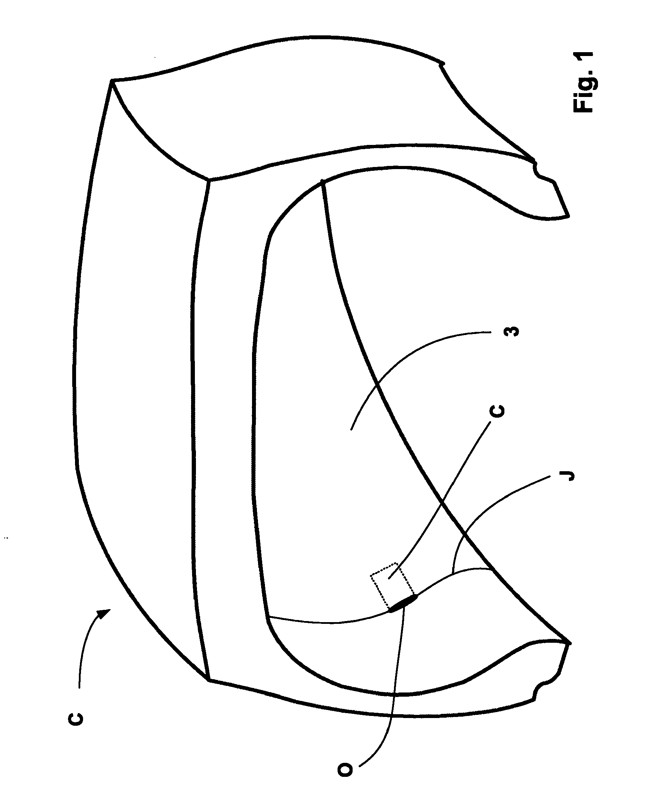

Dans ce qui suit, on désignera par les mêmes références les éléments ayant des fonctions identiques, tels que représentés sur les figures 1 à 21.

La figure 1 représente une vue partielle en perspective d'un pneumatique (P) comportant une cavité (C) dont l'ouverture (O) débouche dans le volume intérieur dudit pneumatique et est placée sur une portion d'un joint d'aboutage (J) du profilé caoutchouteux qui forme la première couche (3) adjacente au volume intérieur dudit pneumatique.

Le dispositif électronique (non représenté) est inséré directement par l'ouverture (O). Il reste maintenu dans la cavité (C) par les forces élastiques exercées par la première couche mise en tension à la suite de l'introduction dudit dispositif à l'intérieur de la cavité.

Le module élastique et l'épaisseur du matériau qui compose ladite première couche (3) devront être adaptés pour remplir cette fonctionnalité. L'homme du métier n'aura pas de mal à déterminer ces valeurs selon que la localisation de la cavité et la nature du matériau constituant la première couche à cet endroit précis.

Les dimensions de la cavité sont ajustées aux dimensions du dispositif électronique destiné à y être inséré.

La figure 1 représente un pneumatique dans lequel l'orientation du joint d'aboutage (J) du profilé constituant la première couche (3) est sensiblement radial. On remarquera que l'invention peut être indifféremment mise en oeuvre pour une orientation angulaire, du joints d'aboutage (J) du profilé caoutchouteux formant la première couche (3) différente de l'orientation radiale et indifféremment comprise entre 0° et 90° par rapport à la direction circonférentielle.

De même la position radiale de la cavité pourra être choisie de manière quelconque entre la zone du talon où sont situées les tringles de renfort de la zone basse et la couronne intérieure du pneumatique (P) qui est la partie située sous le sommet du pneumatique. On choisira néanmoins un emplacement compatible avec les sollicitations fonctionnelles de la zone en question lors de l'usage du pneumatique.

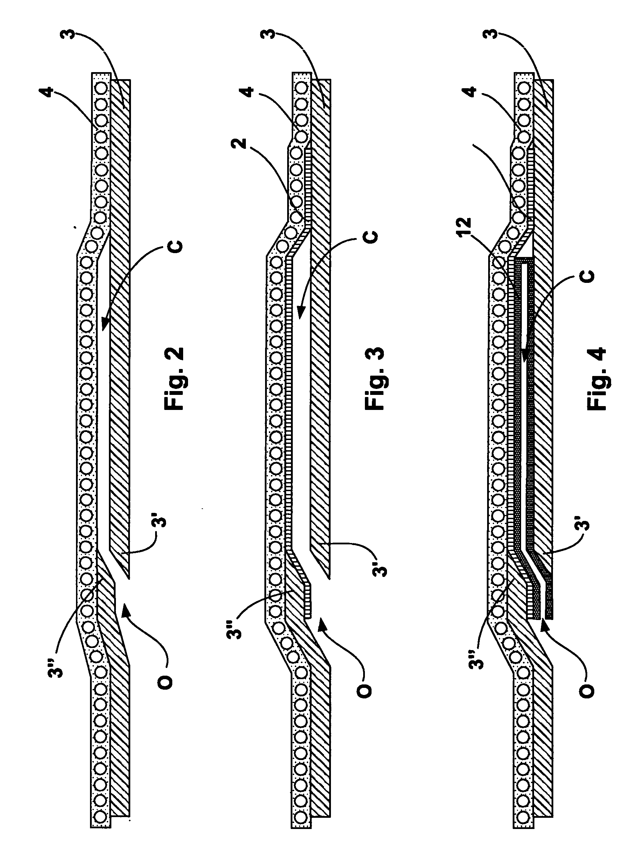

La figure 2 représente une vue en coupe d'une forme simplifiée de réalisation d'une cavité conforme à l'invention dans laquelle ladite cavité (C) est formée par une absence localisée de liaisons caoutchoutiques entre la première couche (3) et la deuxième couche (4). L'ouverture (O) de la cavité (C) est placée sur une portion d'un joint de soudure entre les lèvres (3') et (3") de la première couche (3).

Dans un premier exemple d'application pour des pneumatiques nécessitant plusieurs couches de matériaux étanches à l'air, la première et la deuxième couche peuvent être constituées du même matériau.

Dans un deuxième exemple d'application, la première couche peut être constituée d'un matériau étanche à l'air et la deuxième couche est constituée de la nappe de renfort.

Dans ces conditions, et de manière à améliorer l'étanchéité globale du pneumatique, il peut s'avérer intéressant, comme cela est montré sur la figure 3, de disposer une semelle (2) formée à partir d'un matériau ayant des propriétés d'étanchéité à l'air similaires au matériau qui constitue la première couche (3), et comportant une face interne et une face externe, ladite semelle (2) formant une liaison caoutchoutique avec ladite deuxième couche (4) sur la totalité de sa face interne, et dont une partie de la face externe est adjacente à la cavité (C). La face externe desdites couches se définit comme la face dirigée vers le volume interne du pneumatique, et la face externe est la face dirigée vers le coté opposé.

Il sera judicieux en effet de prévoir une semelle (2) dont la longueur et la largeur sont de dimensions légèrement supérieures à la longueur et à la largeur de la cavité (C), de manière à assurer une bonne qualité d'étanchéité aux limites de la cavité (C) du fait des liaisons caoutchoutiques qui s'établiront entre la partie de la face externe de la semelle (2) non adjacente à la cavité (C) et la première couche (3).

De même, afin de renforcer la protection de la surface de la cavité et éviter les dégradations provoquées par les frottements entre le module de détection et les parois de la cavité il peut être utile de disposer une couche de protection (1) sur les parois de la cavité (C) comme cela est détaillé sur la figure 4.

Cette couche de protection sera constituée par deux couches d'un matériau extensible. Ce matériau pourra être choisi à titre non limitatif parmi des matériaux élastiques de nature caoutchoutique ou en sélectionnant une base textile tissée ou non tissée adaptée à cet usage. Ce matériau extensible est destiné à adhérer à la première couche (3), ainsi qu'à la deuxième couche (4) ou à la semelle (2), la cavité (C) se situant alors entre lesdites couches de protection.

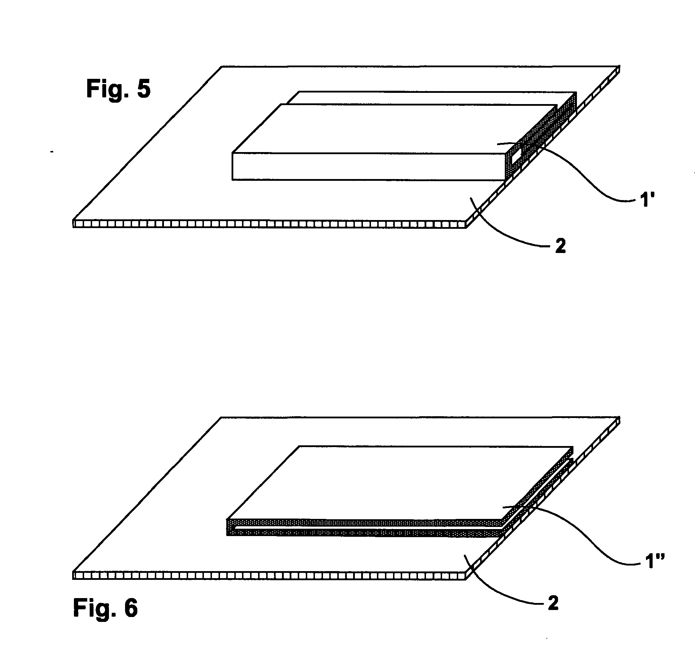

Les figures 5 et 6 montrent deux formes particulières de réalisation de cette couche de protection (1) à partir d'un tissé textile replié sur lui-même dans le sens longitudinal (1') ou dans le sens transversal (1"). Pour des détecteurs de taille importante il est possible de disposer des soufflets situés sur les parties latérales ou sur la partie opposée à l'ouverture (O) de manière à augmenter le volume intérieur de la cavité.

Dans chacune des configurations de cavités (C) décrites précédemment la cavité (C) est formée par une absence localisée de liaison caouchoutiques entre la première couche (3) et la deuxième couche (4) ou la semelle (2) ou entre les couches de protection elles mêmes. Pour obtenir cet effet particulier, à cet endroit précis du pneumatique, il est possible de faire appel à plusieurs techniques.

Une première technique consiste, lors de la confection du pneumatique, à déposer à l'aide d'un pinceau, d'une brosse ou par pulvérisation, localement sur la première couche (3) et la portion de lèvre (3') un produit anticollant à l'emplacement où l'on souhaite disposer la cavité (C) et l'ouverture (O). Ce produit anticollant peut être constitué par exemple d'une solution à base de silicones qui aura pour effet, au moment de la vulcanisation d'empêcher la formation des liaisons caoutchoutiques sur cette zone.

Les étapes de réalisation du pneumatique comprendront les étapes suivantes :
- déposer sur un tambour d'assemblage (D) la première partie d'un tronçon d'une première couche (3) constituée par l'ensemble des profilés caoutchouteux adjacents au volume intérieur dudit pneumatique (P), et dont le bord comporte une première lèvre (3') d'un joint d'aboutage (J),
- déposer un produit anticollant localement sur la zone de la première couche (3) destinée à délimiter la cavité (C) et sur la portion adjacente de la lèvre (3'),
- achever la pose du tronçon de la dite première couche en déposant la deuxième partie dudit tronçon qui comporte une deuxième lèvre (3"),
- abouter la première lèvre (3') et la deuxième lèvre (3") du joint d'aboutage (J),
- déposer une deuxième couche (4) constituée par l'ensemble des profilés caoutchouteux formant une liaison caoutchoutique avec ladite première couche,
- poursuivre et achever la pose des profilés caoutchouteux composant le pneumatique,
- vulcaniser le pneumatique dans une presse de cuisson.

La présence du produit anti-collant empêche la formation de liaisons caoutchoutiques entre la première et la deuxième couche de manière localisée à l'endroit précis où l'on souhaite disposer la cavité (C) et le dépôt de cette même composition anti-collante sur la lèvre autorise la formation de l'ouverture (O) au niveau de la cavité (C).

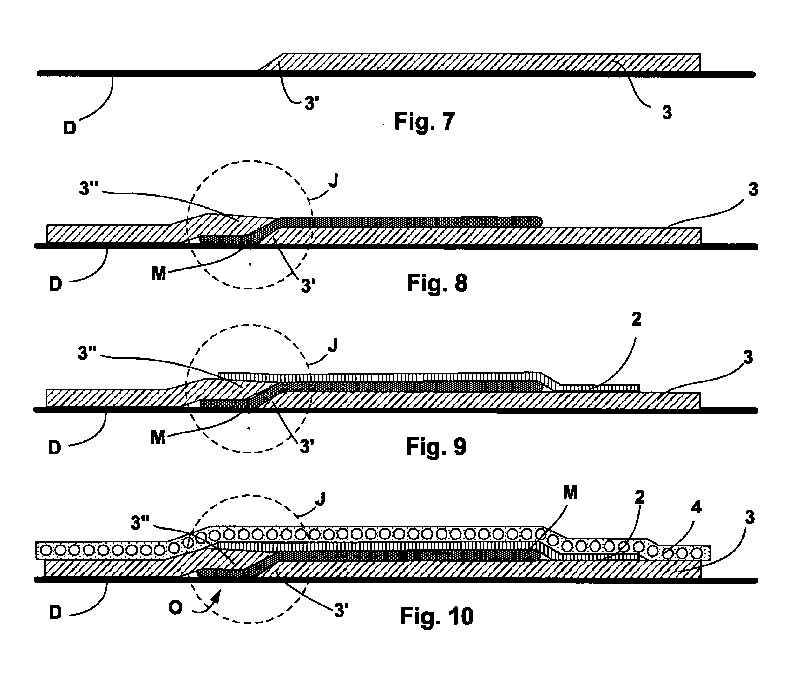

Une alternative consiste en lieu et place de la dépose d'une solution anticollante à déposer une pièce intermédiaire amovible (M) destinée à empêcher la formation localisée des liaisons caoutchoutiques au niveau de la cavité (C) et de l'ouverture (O) et dont le mode de mise en oeuvre est détaillé dans les figures 7 à 10. Cette pièce intermédiaire pourra être constituée d'un matériau à base de silicone ou être recouverte d'un revêtement anti-collant tel qu'un revêtement à base de Polytétrafluoroéthylène de type Teflon® commercialisé par la Société Du Pont de Nemours.

Le procédé comprend alors les étapes suivantes :
- déposer sur un tambour d'assemblage (D) la première partie d'un tronçon d'une première couche (3) constituée par l'ensemble des profilés caoutchouteux adjacents au volume intérieur dudit pneumatique (P), et dont le bord comporte une première lèvre (3') d'un joint d'aboutage (J),
- déposer sur la zone de la première partie de tronçon destinée à délimiter la cavité (C) et sur la lèvre (3') adjacente une pièce intermédiaire (M) amovible dont les deux faces sont recouvertes d'un matériau anticollant,
- achever la pose du tronçon de la dite première couche en déposant la deuxième partie dudit tronçon qui comporte une deuxième lèvre (3"),
- abouter la première lèvre (3') et la deuxième lèvre (3") sur la longueur du joint d'aboutage (J) à l'exception de la portion recouverte par la pièce intermédiaire (M),
- déposer une deuxième couche (4) constituée par l'ensemble des profilés caoutchouteux formant une liaison caoutchoutique avec ladite première couche,
- poursuivre la pose des profilés caoutchouteux composant le pneumatique,
- vulcaniser le pneumatique,
- retirer la pièce intermédiaire (M) par l'ouverture (O).

Une autre alternative consiste à déposer une pièce intermédiaire destinée rester à demeure dans le pneumatique de manière à servir de couche de protection (1). Comme cela a déjà été évoqué, cette pièce peut être constituée de deux couches de matériau extensible ou par une couche repliée sur elle-même replié et dont les faces en contact sont recouvertes d'un produit anti-collant (1', 1").

Le procédé comprend alors les étapes suivantes :
- déposer sur un tambour d'assemblage (D) la première partie d'un tronçon d'une première couche (3) constituée par l'ensemble des profilés caoutchouteux adjacents au volume intérieur dudit pneumatique (P), et dont le bord comporte une première lèvre (3') d'un joint d'aboutage (J),
- déposer sur la zone de la première partie de tronçon destinée à délimiter la cavité (C) et sur la lèvre (3') adjacente une pièce intermédiaire (1, 1', 1") constituée de deux couches d'un matériau extensible dont les deux faces en contact sont recouvertes d'un matériau anticollant,
- achever la pose du tronçon de la dite première couche en déposant la deuxième partie dudit tronçon qui comporte une deuxième lèvre (3"),
- abouter la première lèvre (3') et la deuxième lèvre (3") sur la longueur du joint d'aboutage (J) à l'exception de la portion recouverte par la pièce intermédiaire (M),
- déposer une deuxième couche (4) constituée par l'ensemble des profilés caoutchouteux formant une liaison caoutchoutique avec ladite première couche,
- poursuivre la pose des profilés caoutchouteux composant le pneumatique,
- vulcaniser le pneumatique.

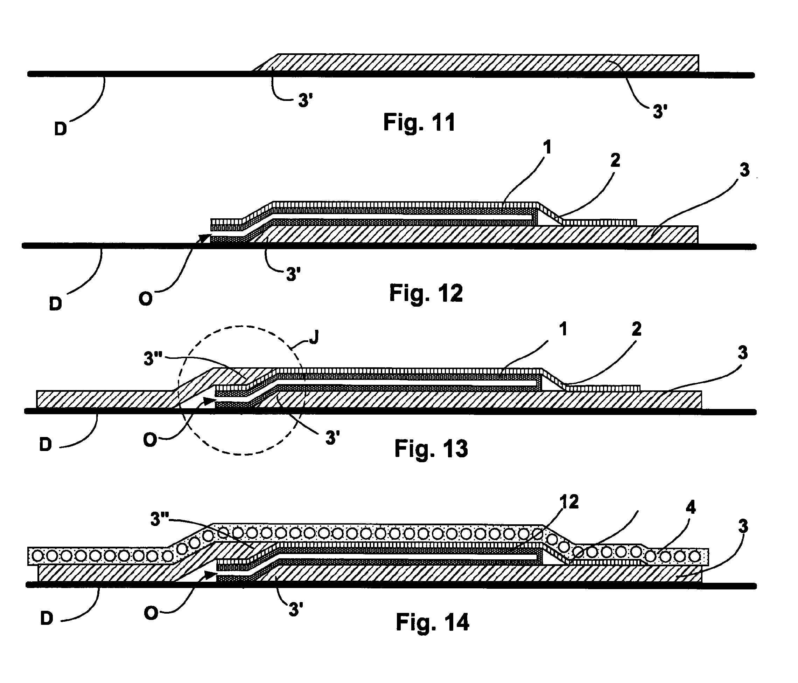

La pose du profilé caoutchouteux constituant la semelle (2) pourra se faire indistinctement avant l'aboutage des lèvres et juste après la pose de la pièce intermédiaire comme cela est illustré sur les figures 11 à 14, ou après l'aboutage des lèvres comme cela est illustré sur les figures 7 à 10 où il est suggéré que le profilé constituant la semelle (2) et la pièce intermédiaire constituant la couche de protection et la semelle sont pré assemblées.

La réalisation d'un pneumatique conforme à l'invention s'effectue généralement sur une forme cylindrique ou torique sur laquelle sont déposés circonférentiellement les tronçons de profilé caoutchouteux constituant le pneumatique.

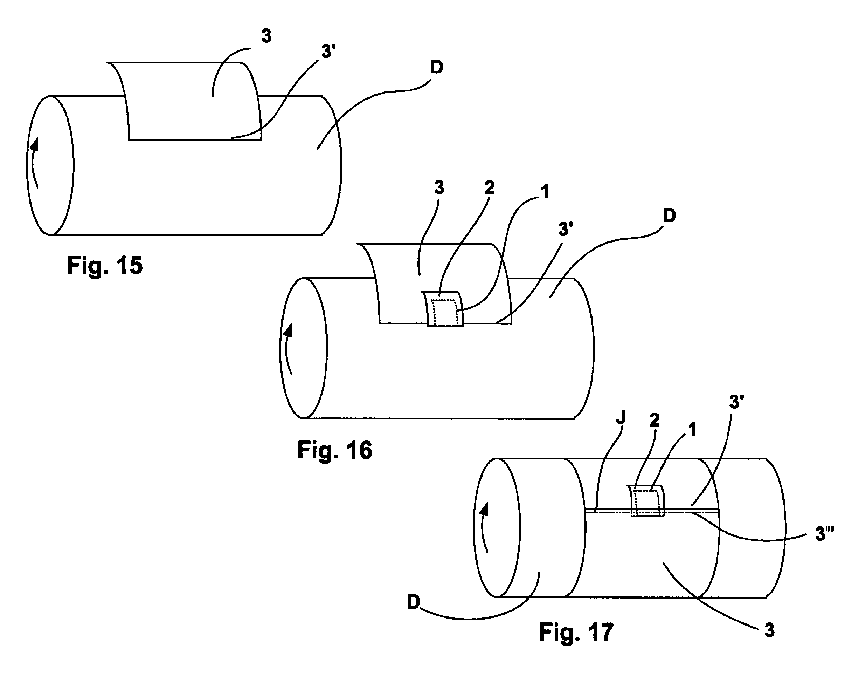

A titre illustratif, la figure 15 montre, en vue perspective schématique, la pose sur un tambour (D) de forme cylindrique de la première partie du tronçon formant la première couche (3) et comportant une première lèvre (3'). La figure 16 illustre la pose de la pièce intermédiaire (1) et de la semelle (2), et la figure 17 illustre l'achèvement de l'étape consistant à abouter les deux lèvres (3') et (3").

Toutefois il est également possible de mettre en oeuvre l'invention sur un procédé dans lequel les profilés caoutchouteux sont déposés sous forme de bandelettes enroulées.

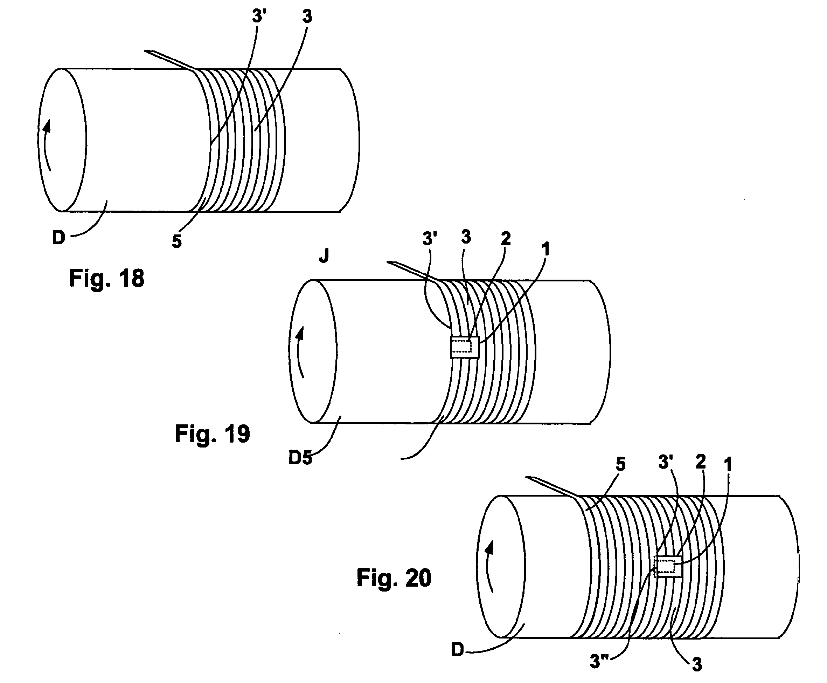

Ainsi la figure 18 illustre, en vue perspective schématique, la pose sur un tambour (D) de forme cylindrique de la première partie du tronçon formant la première couche (3) et comportant une première lèvre (3'). La figure 19 illustre l'étape consistant à déposer la pièce intermédiaire (1) et la semelle (2). La figure 20 illustre l'achèvement de l'étape consistant à déposer la première couche sur le tambour (D) après avoir abouté les deux lèvres (3') et (3") des deux spires jointives formant le joint destiné à recevoir l'ouverture (O) de la cavité (C). Les figures 18, 19 et 20 illustrent la pose d'une bandelette enroulée sur un tambour de forme cylindrique.

Il va de soi que ce tambour peut être tout aussi bien remplacé par un support ayant la forme du volume intérieur du pneumatique.

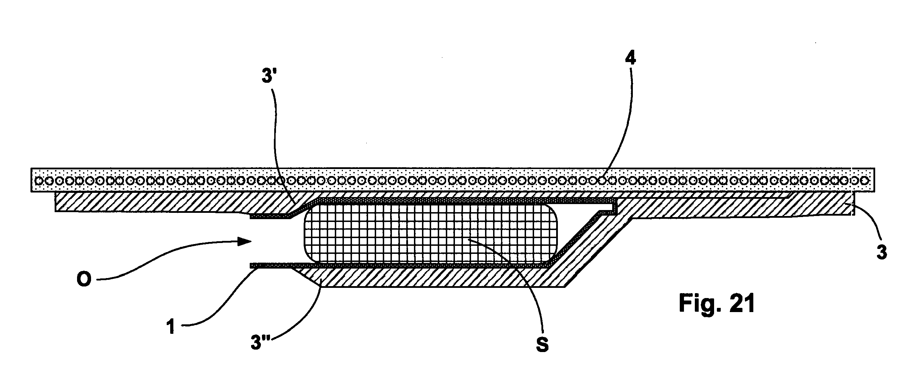

La figure 21 illustre en coupe la situation dans laquelle un détecteur (S) est disposé dans la cavité (C).

On remarquera que cette invention procure un certain nombre d'avantages spécifiques liés à sa forme de réalisation.

Un premier avantage réside dans le fait que l'on évite certains des inconvénients liés à la réalisation de poches directement disposées sur la surface interne du pneumatique. On constate en effet que, dans ce cas précis, ladite poche a tendance à être entraînée par la membrane de cuisson au moment du déploiement en presse de cette dernière ce qui a pour effet de créer des décollements et des défauts de fabrication.

On évite de plus les étapes de préparation de la surface destinée à recevoir la poche ce qui représente un gain de temps appréciable lors de la réalisation du pneumatique.

Un deuxième avantage concerne la grande aptitude des pneumatiques réalisés conformément à l'invention à subir les opérations de rechapage successifs sans qu'il soit nécessaire de préparer la surface intérieure du pneumatique de manière à enlever les supports disposés sur la surface interne pour assurer le maintien d'un dispositif de surveillance amovible, et susceptibles d'agresser la membrane de cuisson lors de l'opération de vulcanisation.

## Revendications

1. Pneumatique (P) comprenant une cavité (C) destinée à recevoir un dispositif de surveillance électronique (D) amovible, ladite cavité étant réalisée à l'intérieur des composants du dudit pneumatique (P), **caractérisé en ce que** l'ouverture (O) de la cavité (C) débouche dans le volume intérieur du pneumatique (P), et est située sur une portion d'un joint d'aboutage (J) d'une première couche (3) formée par les profilés caoutchouteux adjacents au volume intérieur dudit pneumatique (P).

2. Pneumatique (P) comprenant une cavité (C) selon la revendication 1, dans lequel ladite cavité est disposée entre la dite première couche (3) et une deuxième couche (4) formée par les profilés caoutchouteux ayant une liaison caoutchoutique avec ladite première couche.

3. Pneumatique (P) comprenant une cavité (C) selon la revendication 2, dans lequel ladite cavité est formée par une absence localisée de liaisons caoutchoutiques entre ladite première couche (3) et ladite deuxième couche (4).

4. Pneumatique (P) selon l'une quelconque des revendications 1 à 3, dans lequel le matériau caoutchouteux formant ladite première couche (3) possède des propriétés d'étanchéité à l'air.

5. Pneumatique (P) selon la revendication 1, comprenant une semelle (2) comportant une face interne et une face externe, ladite semelle (2) formant une liaison caoutchoutique avec ladite deuxième couche (4) sur la totalité de sa face interne, et dont une partie de la face externe est adjacente à la cavité (C).

6. Pneumatique (P) selon la revendication 5 dans lequel la semelle (2) est composée d'un matériau caoutchouteux de même nature que le matériau de ladite première couche (3).

7. Pneumatique (P) selon l'une quelconque des revendications 1 à 6 dans lequel l'orientation des joints d'aboutage (J) du profilé caoutchouteux formant la première couche (3) est sensiblement radiale.

8. Pneumatique (P) selon l'une quelconque des revendications 1 à 6 dans lequel l'orientation des joints d'aboutage (J) du profilé caoutchouteux formant la première couche (3) est sensiblement circonférentielle.

9. Pneumatique (P) selon l'une quelconque des revendications 1 à 6, dans lequel l'orientation angulaire, par rapport à la direction circonférentielle, des joints d'aboutage (J) du profilé caoutchouteux formant la première couche (3) est comprise entre 0° et 90°.

10. Pneumatique selon la revendication 1, dans lequel la cavité (C) est située radialement entre le talon dudit pneumatique et la couronne supérieure.

11. Pneumatique (P) selon l'une quelconque des revendications 2 à 10 dans lequel les parois de la cavité de maintien (C) destinées à être en contact avec le dispositif de surveillance électronique sont recouvertes d'une couche de protection (1, 1') composée d'un matériau extensible.

12. Pneumatique (P) selon la revendication 11 dans lequel le matériau extensible formant la couche de protection (1, 1') comprend une base textile tissée ou non tissée.

13. Pneumatique (P) selon la revendication 11 dans lequel le matériau extensible formant la couche de protection (1, 1') comprend un matériau élastique de nature caoutchoutique.

14. Procédé de réalisation d'un pneumatique (P) comprenant les étapes suivantes :
- déposer sur un tambour d'assemblage la première partie d'un tronçon d'une première couche (3) constituée par l'ensemble des profilés caoutchouteux adjacents au volume intérieur dudit pneumatique (P), et dont le bord comporte une première lèvre (3') d'un joint d'aboutage (J),
- déposer un produit anticollant localement sur la zone de la première couche (3) destinée à délimiter la cavité (C) et sur la portion de lèvre adjacente (3'),
- achever la pose du tronçon de la dite première couche en déposant la deuxième partie dudit tronçon qui comporte une deuxième lèvre (3"),
- abouter la première lèvre (3') et la deuxième lèvre (3") du joint d'aboutage (J),
- déposer une deuxième couche (4) formée par les profilés caoutchouteux ayant une liaison caoutchoutique avec ladite première couche,
- poursuivre la pose des profilés caoutchouteux composant le pneumatique,
- vulcaniser le pneumatique.

15. Procédé de réalisation d'un pneumatique (P) comprenant les étapes suivantes :
- déposer sur un tambour d'assemblage la première partie d'un tronçon d'une première couche (3) constituée par l'ensemble des profilés caoutchouteux adjacents au volume intérieur dudit pneumatique (P), et dont le bord comporte une première lèvre (3') d'un joint d'aboutage (J),
- déposer sur la zone de la première partie de tronçon destinée à délimiter la cavité (C) et sur la lèvre (3') adjacente, une pièce intermédiaire (1, 1', 1", M) dont au moins une des faces est recouverte d'un matériau anti-collant,
- achever la pose du tronçon de la dite première couche en déposant la deuxième partie dudit tronçon qui comporte une deuxième lèvre (3"),
- abouter la première lèvre (3') et la deuxième lèvre (3") du joint d'aboutage (J),
- déposer une deuxième couche (4) formée par les profilés caoutchouteux ayant une liaison caoutchoutique avec ladite première couche,
- poursuivre la pose des profilés caoutchouteux composant le pneumatique,
- vulcaniser le pneumatique.

16. Procédé selon la revendication 15 dans lequel la pièce intermédiaire (M) est recouverte sur ses deux faces d'un matériau anti-collant, ladite pièce intermédiaire (M) étant destinée à être retirée de la cavité (C) par l'ouverture (O) après l'étape de vulcanisation.

17. Procédé selon la revendication 14 ou 15 dans lequel l'étape consistant à déposer la deuxième couche (4) est précédée d'une étape consistant à déposer sur la zone de la première couche destinée à délimiter la cavité (C) ou sur ladite pièce intermédiaire (1, 1', 1", M) une semelle (2).

18. Procédé selon la revendication 15 dans lequel la pièce intermédiaire (1, 1', 1") est destinée à rester à demeure dans le pneumatique de manière à servir de couche de protection, et est constituée d'un matériau extensible replié sur lui-même dont les faces en contact sont recouvertes d'un produit anti-collant.

## Claims

1. Tyre (P) comprising a cavity (C) intended to hold a removable electronic monitoring device (D), said cavity being produced inside the component parts of said tyre (P), **characterized in that** the opening (0) of the cavity (C) opens out into the internal volume of the tyre (P) and is located on a portion of a butt joint (J) of a first layer (3) formed by the rubber profiled elements adjacent to the internal volume of said tyre (P).

2. Tyre (P) comprising a cavity (C) according to Claim 1, in which said cavity is located between said first layer (3) and a second layer (4) formed by the rubber profiled elements having a rubber connection with said first layer.

3. Tyre (P) comprising a cavity (C) according to Claim 2, in which said cavity is formed by a local absence of rubber connections between said first layer (3) and said second layer (4).

4. Tyre (P) according to any one of Claims 1 to 3, in which the rubber material forming said first layer (3) has airtightness properties.

5. Tyre (P) according to Claim 1, comprising a sole (2) having an inner face and an outer face, said sole (2) forming a rubber connection with said second layer (4) over its entire inner face, with a part of the outer face being adjacent to the cavity (C).

6. Tyre (P) according to Claim 5, in which the sole (2) is made of a rubber material of the same type as the material of said first layer (3).

7. Tyre (P) according to any one of Claims 1 to 6, in which the orientation of the butt joints (J) of the rubber profiled element forming the first layer (3) is approximately radial.

8. Tyre (P) according to any one of Claims 1 to 6, in which the orientation of the butt joints (J) of the rubber profiled element forming the first layer (3) is approximately circumferential.

9. Tyre (P) according to any one of Claims 1 to 6, in which the angular orientation, with respect to the circumferential direction, of the butt joints (J) of the rubber profiled element forming the first layer (3) is between 0° and 90°.

10. Tyre according to Claim 1, in which the cavity (C) is located radially between the bead of said tyre and the upper crown.

11. Tyre (P) according to any one of Claims 2 to 10, in which the walls of the holding cavity (C) which are intended to come into contact with the electronic monitoring device are covered with a protective layer (1, 1') made of an extensile material.

12. Tyre (P) according to Claim 11, in which the extensile material forming the protective layer (1, 1') comprises a woven or nonwoven textile base.

13. Tyre (P) according to Claim 11, in which the extensile material forming the protective layer (1, 1') comprises an elastic material of the rubber type.

14. Method of producing a tyre (P), comprising the following steps:
- depositing on an assembly drum the first part of a portion of a first layer (3) formed by all the rubber profiled elements adjacent to the internal volume of said tyre (P), the edge of which part comprises a first lip (3') of a butt joint (J),
- depositing a non-stick product locally on the region of the first layer (3) intended to bound the cavity (C) and on the adjacent lip portion (3'),
- completing the positioning of the portion of said first layer by depositing the second part of said portion, which comprises a second lip (3"),
- butting together the first lip (3') and the second lip (3") of the butt joint (J),
- depositing a second layer (4) formed by the rubber profiled elements having a rubber connection with said first layer,
- continuing to position the rubber profiled elements of which the tyre is made,
- vulcanizing the tyre.

15. Method of producing a tyre (P), comprising the following steps:
- depositing on an assembly drum the first part of a portion of a first layer (3) formed by all the rubber profiled elements adjacent to the internal volume of said tyre (P), the edge of which part comprises a first lip (3') of a butt joint (J),
- depositing an intermediate piece (1, 1', 1", M) on the region of the first part of the portion intended to bound the cavity (C) and on the adjacent lip (3'), at least one of the faces of said intermediate piece (1, 1', 1", M) being covered with a non-stick material,
- completing the positioning of the portion of said first layer by depositing the second part of said portion, which comprises a second lip (3"),
- butting together the first lip (3') and the second lip (3") of the butt joint (J),
- depositing a second layer (4) formed by the rubber profiled elements having a rubber connection with said first layer,
- continuing to position the rubber profiled elements of which the tyre is made,
- vulcanizing the tyre.

16. Method according to Claim 15, in which the intermediate piece (M) is covered on its two faces by a non-stick material, said intermediate piece (M) being intended to be withdrawn from the cavity (C) through the opening (0) following the vulcanization step.

17. Method according to Claim 14 or 15, in which the step of depositing the second layer (4) is preceded by a step of depositing a sole (2) on the region of the first layer intended to bound the cavity (C) or on said intermediate piece (1, 1', 1", M).

18. Method according to Claim 15, in which the intermediate piece (1, 1', 1") is intended to remain permanently in the tyre so as to act as a protective layer and consists of an extensile material which is folded back on itself and the contacting faces of which are covered with a non-stick product.

## Patentansprüche

1. Luftreifen (P) mit einem Hohlraum (C), der dazu bestimmt ist, eine entfernbare elektronische Überwachungsvorrichtung (D) aufzunehmen, wobei der Hohlraum im Inneren der Bestandteile des Luftreifens (P) hergestellt ist, **dadurch gekennzeichnet, dass** die Öffnung (O) des Hohlraums (C) in das Innenvolumen des Luftreifens (P) mündet und sich in einem Abschnitt einer Stoßverbindung (J) einer ersten Schicht (3) befindet, die von den dem Innenvolumen des Luftreifens (P) benachbarten Kautschukprofiteilen gebildet wird.

2. Luftreifen (P) mit einem Hohlraum (C) nach Anspruch 1, wobei der Hohlraum zwischen der ersten Schicht (3) und einer zweiten Schicht (4) angeordnet ist, die von den Kautschukprofilteilen gebildet wird, welche eine Kautschukverbindung mit der ersten Schicht haben.

3. Luftreifen (P) mit einem Hohlraum (C) nach Anspruch 2, wobei der Hohlraum durch eine lokalisierte Abwesenheit von Kautschukverbindungen zwischen der ersten Schicht (3) und der zweiten Schicht (4) gebildet wird.

4. Luftreifen (P) nach einem der Ansprüche 1 bis 3, bei dem das die erste Schicht (3) bildende Kautschukmaterial Luftdichtheits-Eigenschaften besitzt.

5. Luftreifen (P) nach Anspruch 1, der eine Sohle (2) enthält, die eine Innenseite und eine Außenseite aufweist, wobei die Sohle (2) eine Kautschukverbindung mit der zweiten Schicht (4) über die Gesamtheit ihrer Innenseite bildet, und von der ein Teil der Außenseite dem Hohlraum (C) benachbart ist.

6. Luftreifen (P) nach Anspruch 5, bei dem die Sohle (2) aus einem Kautschukmaterial gleicher Beschaffenheit wie das Material der ersten Schicht (3) besteht.

7. Luftreifen (P) nach einem der Ansprüche 1 bis 6, bei dem die Ausrichtung der Stoßverbindungen (J) des die erste Schicht (3) bildenden Kautschukprofiteils im Wesentlichen radial ist.

8. Luftreifen (P) nach einem der Ansprüche 1 bis 6, bei dem die Ausrichtung der Stoßverbindungen (J) des die erste Schicht (3) bildenden Kautschukprofilteils im Wesentlichen in Umfangsrichtung verläuft.

9. Luftreifen (P) nach einem der Ansprüche 1 bis 6, bei dem die Winkelausrichtung bezüglich der Umfangsrichtung der Stoßverbindungen (J) des die erste Schicht (3) bildenden Kautschukprofilteils zwischen 0° und 90° liegt.

10. Luftreifen nach Anspruch 1, bei dem der Hohlraum (C) sich radial zwischen dem Wulst des Luftreifens und dem oberen Kranz befindet.

11. Luftreifen (P) nach einem der Ansprüche 2 bis 10, bei dem die Wände des Haltehohlraums (C), die dazu bestimmt sind, mit der elektronischen Überwachungsvorrichtung in Kontakt zu sein, mit einer aus einem dehnbaren Material bestehenden Schutzschicht (1, 1') bedeckt sind.

12. Luftreifen (P) nach Anspruch 11, bei dem das die Schutzschicht (1, 1') bildende dehnbare Material eine gewebte oder in Vliesform vorliegende Textilbasis enthält.

13. Luftreifen (P) nach Anspruch 11, bei dem das die Schutzschicht (1, 1') bildende dehnbare Material ein elastisches Material von Kautschukbeschaffenheit enthält.

14. Verfahren zur Herstellung eines Luftreifens (P), das die folgenden Schritte enthält:
- Aufbringen auf eine Aufbautrommel des ersten Teils eines Abschnitts einer ersten Schicht (3), die aus der Gesamtheit der dem Innenvolumen des Luftreifens (P) benachbarten Kautschukprofilteile besteht, und dessen Rand eine erste Lippe (3') einer Stoßverbindung (J) aufweist,
- Aufbringen eines Antihaft-Produkts lokal auf die Zone der ersten Schicht (3), die dazu bestimmt ist, den Hohlraum (C) zu begrenzen, und auf den benachbarten Lippenabschnitt (3'),
- Beenden des Verlegens des Abschnitts der ersten Schicht, indem der zweite Teil des Abschnitts aufgebracht wird, der eine zweite Lippe (3") aufweist,
- Aneinanderfügen der ersten Lippe (3') und der zweiten Lippe (3") der Stoßverbindung (J),
- Aufbringen einer zweiten Schicht (4), die von den Kautschukprofilteilen gebildet wird, die eine Kautschukverbindung mit der ersten Schicht haben,
- Fortsetzen des Verlegens der den Luftreifen bildenden Kautschukprofilteile,
- Vulkanisieren des Luftreifens.

15. Verfahren zur Herstellung eines Luftreifens (P), das die folgenden Schritte enthält:
- Aufbringen auf eine Aufbautrommel des ersten Teils eines Abschnitts einer ersten Schicht (3), die aus der Gesamtheit der dem Innenvolumen des Luftreifens (P) benachbarten Kautschukprofilteile besteht, und dessen Rand eine erste Lippe (3') einer Stoßverbindung (J) aufweist,
- Aufbringen auf die Zone des ersten Abschnittsteils, die dazu bestimmt ist, den Hohlraum (C) zu begrenzen, und auf die benachbarte Lippe (3'), eines Zwischenbauteils (1, 1', 1", M), von dem mindestens eine Seite mit einem Antihaft-Material bedeckt ist,
- Beenden des Verlegens des Abschnitts der ersten Schicht, indem der zweite Teil des Abschnitts aufgebracht wird, der eine zweite Lippe (3") aufweist,
- Aneinanderfügen der ersten Lippe (3') und der zweiten Lippe (3") der Stoßverbindung (J),
- Aufbringen einer zweiten Schicht (4), die von den Kautschukprofilteilen gebildet wird, die eine Kautschukverbindung mit der ersten Schicht haben,
- Fortsetzen des Verlegens der den Luftreifen bildenden Kautschukprofilteile,
- Vulkanisieren des Luftreifens.

16. Verfahren nach Anspruch 15, bei dem das Zwischenbauteil (M) auf seinen beiden Seiten mit einem Antihaft-Material bedeckt ist, wobei das Zwischenbauteil (M) dazu bestimmt ist, nach dem Vulkanisierungsschritt durch die Öffnung (0) aus dem Hohlraum (C) entfernt zu werden.

17. Verfahren nach Anspruch 14 oder 15, bei dem vor dem Schritt, der darin besteht, die zweite Schicht (4) aufzubringen, ein Schritt liegt, der darin besteht, auf die Zone der ersten Schicht, die dazu bestimmt ist, den Hohlraum (C) zu begrenzen, oder auf das Zwischenbauteil (1, 1', 1", M), eine Sohle (2) aufzubringen.

18. Verfahren nach Anspruch 15, bei dem das Zwischenbauteil (1, 1', 1") dazu bestimmt ist, auf Dauer im Luftreifen zu bleiben, um als Schutzschicht zu dienen, und aus einem auf sich selbst gefalteten, dehnbaren Material besteht, dessen in Kontakt befindliche Seiten mit einem Antihaft-Produkt bedeckt sind.
